# EUROPEAN PATENT APPLICATION

(11) **EP 3 021 603 A1**
(43) Date of publication of application: **18.05.2016**
(21) Application number: 14306799.9
(22) Date of filing: 12.11.2014
(51) Int. Cl.: H04W 12/04, H04W 84/18

(54) **Method of managing pairing with a wireless device**

(71) Applicant: GEMALTO SA, 92190 Meudon (FR)
(72) Inventor: Gullberg, Peter, 13881 GEMENOS CEDEX (FR); Simonsson, Johan, 13881 GEMENOS CEDEX (FR); Josefsson, Johan, 13881 GEMENOS CEDEX (FR)

(57) **Abstract**

The invention is a method for allowing communication with an application which is embedded in a first wireless device. The method comprises the following steps of:
- performing a pairing operation between the application and a second wireless device,
- performing a bonding operation between the application and said second wireless device, then
- establishing a secure channel between the application and the second wireless device by using a security layer provided by the application

## Description

### (Field of the invention)

The present invention relates to methods of managing pairing with a wireless device. It relates particularly to methods of managing communication with an application embedded in a wireless device.

### (Background of the invention)

Many devices are compliant with Bluetooth Low Energy (BLE) specification which allows communicating through a wireless channel. Such a communication involves a pairing operation between two BLE enabled devices. The BLUETOOTH SPECIFICATION Version 4.1 details a pairing mechanism for exchanging a common key. Unfortunately, this pairing mechanism has several drawbacks both in its design and also in the practical implementations. This pairing mechanism is not strong enough. It is possible for an eaves dropper to not only intercept the data exchanged during the pairing phase, but also to be able to gain full control to any BLE communication link and thus to impersonate either side. Additionally, once paired with a targeted BLE device, all applications embedded in the other BLE device can gain full access to all resources of the targeted BLE device.

There is a need for providing a solution increasing the security when accessing a paired wireless device.

### (Summary of the Invention)

An object of the invention is to solve the above mentioned technical problem.

The object of the present invention is a first wireless device comprising an application which is configured to pair and bond itself with a second wireless device and to provide a security layer for establishing a secure channel with the second wireless device.

Advantageously, the application may be configured to manage a password-based key exchange protocol for sharing a key with said second wireless device in order to pair with said second wireless device. The application may have an exclusive access to a secure container embedded in said first wireless device. The application may be configured to store the key in the secure container in order to bond with said second wireless device and the security layer of the application may be configured to establish the secure channel with said second wireless device thanks to the key.

Advantageously, the password-based key exchange protocol may be based on one of the following schemes: a passcode which has a fixed value preset in both sides, a passcode which is randomly generated by one side and manually entered on the other side or a passcode which is identified on one side and sent to the other side through an Out-of-Band channel.

Advantageously, the password-based key exchange protocol may be PACE V2 or elliptic curve Diffie-Hellman.

Advantageously, the second wireless device may have a plurality of resources and the application may be granted access to said plurality of resources as soon as the secure channel is established with the second wireless device.

Advantageously, the application may be configured to detect that the application is no more bond with the second wireless device and to automatically trigger a further bonding step with said second wireless device.

Advantageously, the application may be configured to get an identifier of the second wireless device and to store in the secure container the identifier in association with the key.

Advantageously, the secure container may be a memory area protected and allocated to the application or a physical secure element protected by access rights allocated to the application.

Advantageously, the first wireless device may be a central device as defined by BLUETOOTH SPECIFICATION Version 4.1 and the second wireless device may be a peripheral device as defined by BLUETOOTH SPECIFICATION Version 4.1.

Another object of the invention is a method for allowing communication with an application embedded in a first wireless device. The method comprises the steps of:
- performing a pairing operation between the application and a second wireless device,
- performing a bonding operation between the application and the second wireless device, and
- establishing a secure channel between the application and the second wireless device by using a security layer provided by the application.

Advantageously, the pairing operation may be performed by sharing a key using a password-based key exchange protocol. The application may store the key in a secure container for the bonding operation. The application may have an exclusive access to the secure container and the security layer of the application may establishes the secure channel with the second wireless device thanks to the key.

Advantageously, the second wireless device may have a plurality of resources and the application may be granted access to the plurality of resources as soon as the secure channel is established with said second wireless device.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts an example of a system comprising a central device and a peripheral device which exchange message through a wireless channel according to the invention; and
- Figure 2 depicts an example of pairing and bonding operations between an application embedded in a central device and a peripheral device according to the invention.

### (Detailed description of the preferred embodiments)

The invention may apply to any type of device intended to securely communicate with another device through a wireless channel.

The concept of pairing used herein refers to the process of creating a shared key also called link key or long term key.

The concept of bonding used herein refers to the process of storing the shared key (previously exchanged during the pairing phase) which will be used in subsequent connections in order to form a trusted entity pair.

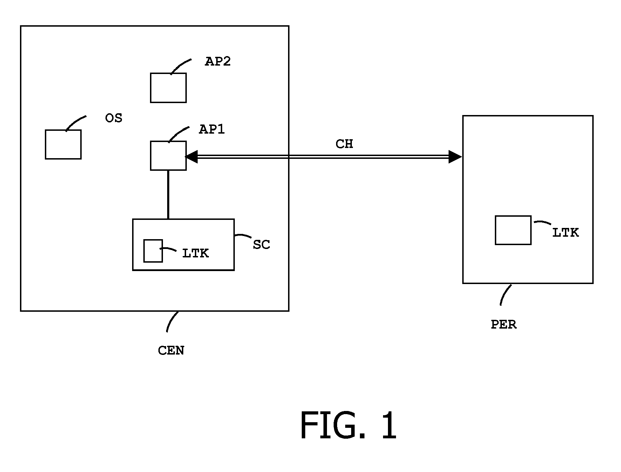

By way of illustration, Figure 1 shows example of a system comprising a central device CEN and a peripheral device PER which exchanges message with an application AP1 embedded in central device CEN through a wireless channel CH.

The concepts of central device and peripheral device refer to the BLUETOOTH Specification Version 4.1.

In this example, the central device CEN is a mobile phone which is able to communicate through a Bluetooth Low Energy communication session. The central device CEN comprises an operating system OS, two software applications AP1, AP2 and a secure container SC.

The application AP1 may be a banking application allowing to perform secure payments by delegating secure treatments to the peripheral device PER for example. The application AP2 may be a loyalty application which does not need to access the peripheral device PER.

The application AP1 is not restricted to a specific type of application and may be for example: a PKI client, an email client that uses PKI for email encryption, a VPN client that uses SSL keyset on a card, a browser that want to access credentials for secure communication and cryptographic operations or a Mobile payment application.

The secure container SC can be implemented as a secure element. A secure element is a tamper-resistant component able to store data and to provide services in a secure manner. The secure element may be a physical component which has a limited amount of memory, a processor with limited capabilities and is generally devoid of battery. For instance a UICC (Universal Integrated Circuit Card) is a secure element which can embed SIM/USIM applications for telecommunication purposes. The secure element can be installed, fixedly or not, in the device CEN. The secure element can be in the format of a smart card. The secure element may also be a chip soldered to the mother-board of the central device CEN and constitute a so-called embedded-secure element (eSE).

Alternatively, the secure container SC may be a memory area protected and specifically allocated to the application AP1. Thus the secure container SC may be implemented via a part of the memory of the central device CEN. The memory can be protected through several types of mechanisms, such as white-box crypto, Keychain, fingerprinting, and any combination in order to protect the secure container SC in the central device CEN for AP1.

The application AP1 has an exclusive access to the secure container SC. In particular, the application AP1 has the credentials or access condition required to access the content of the secure container SC in write and read modes.

It is to be noted that the application AP2 does not have the credentials required to access the secure container SC. The content of the secure container SC can be accessed by the application AP1 only.

In the example of Figure 1, the peripheral device PER is a card reader which is able to communicate through a Bluetooth Low Energy communication session.

The application AP1 is configured to manage a password-based key exchange protocol PP for sharing a key LTK with the peripheral device PER in order to pair with the peripheral device PER.

For instance, the password-based key exchange protocol PP may be based on PACE V2 or elliptic curve Diffie-Hellman.

Once the value of the shared key LTK is identified, the application AP1 is configured to store the shared key LTK in the secure container SC in order to carry out the bonding operation between the application AP1 and the peripheral device PER.

Preferably, the application AP1 is configured to get an identifier of the peripheral device PER and to store in the secure container SC this identifier in association with the shared key LTK. In a preferred embodiment, the identifier and the key LTK are managed through a white list as described in BLUETOOTH Specification Version 4.1. Conversely, the peripheral device PER can store an identifier of the central device CEN in association with the shared key LTK.

The application AP1 is designed to provide a security layer allowing securing a wireless session (e.g. BLE session). Thus application AP1 is configured to establish a secure contactless channel CH with the peripheral device PER based on the key LTK.

Figure 1 shows the system after the bonding step, where the same key LTK is stored both in the peripheral device PER and in the secure container SC of the central device CEN.

Thanks to the invention, the application AP1 is the only entity which gains full access to the whole peripheral device PER. Neither the application AP2, nor the operating system OS can gain access to the peripheral device PER. Thus all the resources (i.e. hardware and software resources) of the peripheral device PER are accessible to the application AP1 only. The application AP1 is granted access to all resources of the peripheral device PER as soon as the secure channel CH is established.

Advantageously, the application AP1 can be configured to detect that the bonding has been lost on either the application AP1 side and/or the peripheral device PER side and to automatically trigger a further bonding operation with the peripheral device PER. Thus the application AP1 can repair a broken bonding since it has access to its secure container which holds the key LTK.

An advantage of this embodiment is that the bonding may be automatically restored without user intervention.

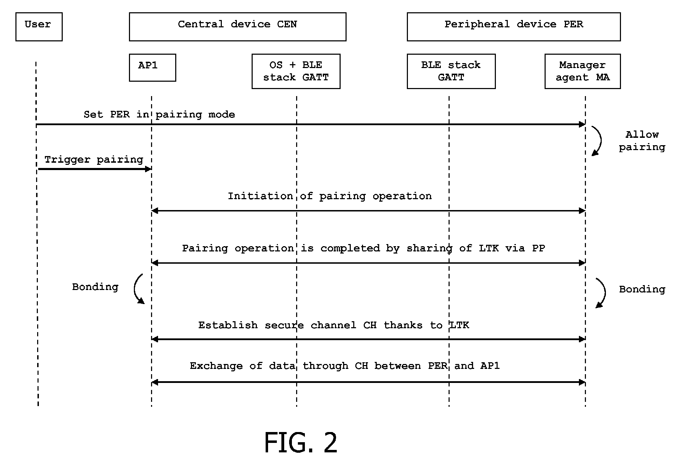

Figure 2 shows an example of pairing and bonding operations between the application AP1 embedded in the central device CEN and the peripheral device PER according to the invention.

The peripheral device PER comprises several resources (e.g. hardware/firmware/applicative resources) which are reachable through a manager agent MA embedded in the peripheral device PER.

At a first step, a user sets the peripheral device PER in pairing mode. This operation may be directly entered by the user by using a Man-Machine interface. In response, the manager agent MA allows the peripheral device PER to be paired.

At a second step, the user triggers the pairing operation at the application AP1 side. At a third step, a first part of the pairing operation is performed between the application AP1 and the manager agent MA. This first part of pairing relies on the usual layers and components provided by a BLE framework. In particular, BLE data blocks are exchanged between the application AP1 and the peripheral device PER through BLE stack of each sides and without requiring any security of the BLE link layer.

It is to be noted that the application AP1 uses the legacy BLE link layer. The application AP1 provides high level services directly accessible by the user while the legacy BLE link layer provides low level protocol features.

Then at a fourth step, the second part of the pairing operation is carried out. A shared key LTK is determined and exchanged between the application AP1 and the peripheral device PER by using a password-based key exchange protocol PP.

For example, the peripheral device PER may generate a passcode (i.e. a secret value like a password or a PIN) and display it on its screen. Preferably, the passcode is generated as a random value. Then the user manually enters the displayed passcode into the central device CEN. Then the central device CEN provides the passcode to the application AP1.

Alternatively, the passcode may be generated by the central device CEN and manually entered into the peripheral device PER.

In another example, the passcode may be transferred from one side to the other side by an out-of-band channel. For instance, the passcode may be conveyed through a NFC (Near Field Communication) session or the reading of a displayed QR code.

In another example, the passcode may be preset in both sides as a fixed (static) value.

At a fifth step, the bonding operation is performed by storing the shared key LTK in both sides. In other words, the application AP1 stores the shared key LTK in its allocated secure container SC and the peripheral device PER stores the shared key LTK in its own secured area. Note that the peripheral device PER may use a secure element or a part of its own memory as secured area.

Advantageously, an identifier of the device PER is stored with the shared key LTK in the secure container allocated to the application AP1. Similarly an identifier of the device CEN and an identifier of the application AP1 are stored with the shared key LTK in the device PER.

At a sixth step, the application AP1 and the peripheral device PER establish a secure channel CH based on the shared key LTK. For example, they can generate a session key from the shared key LTK and use the session key for establishing the secure channel CH.

At a seventh step, the application AP1 and the peripheral device PER exchange data through the secure channel CH.

On central device side, the application AP1 provides a security layer which is in charge of handling the security of secure channel CH.

An advantage of the invention is to guarantee that only the application AP1 can access the shared key stored on the central device side and establish a secure channel with the peripheral device PER. The security of the secure channel is managed by the application AP1 itself in an autonomous way and remains independent of the security layer provided by the customary BLE link layer.

Another advantage of the invention is that access to the resources of the peripheral device PER is reserved for the application AP1. Others applications embedded in the central device CEN cannot reach and use the resources of the peripheral device PER if they are not properly paired and bonded with the peripheral device PER. In other words, the peripheral device PER cannot communicate with the applications of the central device which have not been successfully paired and bonded with the peripheral device PER.

It must be understood, within the scope of the invention, that the above-described embodiments are provided as non-limitative examples. In particular, several applications may be paired and bonded with a same peripheral device and an application may be paired with several peripheral devices. The central device may be any device able to communicate with a contactless channel. The central device may be a tablet, a personal computer, a M2M device, a wearable device like glasses or watch, or any wireless enabled machine.

The peripheral device may be a Display Card with BLE communication, a token device, a M2M module or a proximity card with BLE for example.

The two wireless devices are not necessarily central device and peripheral device in the sense of Bluetooth specification. They can be two contactless devices devoid of central/peripheral relationship.

Even if the above-described examples have been described by reference to Bluetooth specification, the invention may apply to devices using other type of contactless protocol, like NFC or BEX (HIP Base Exchange) for example.

## Claims

1. A first wireless device (CEN) comprising an application (AP1),
**characterized in that** said application (AP1) is configured to pair and bond itself with a second wireless device (PER) and to provide a security layer for establishing a secure channel (CH) with said second wireless device (PER).

2. A first wireless device (CEN) according to claim 1, wherein the application (AP1) is configured to manage a password-based key exchange protocol (PP) for sharing a key (LTK) with said second wireless device (PER) in order to pair with said second wireless device (PER), wherein the application (AP1) has an exclusive access to a secure container (SC) embedded in said first wireless device (CEN), wherein the application (AP1) is configured to store the key (LTK) in the secure container (SC) in order to bond with said second wireless device (PER) and wherein the security layer of the application (AP1) is configured to establish the secure channel (CH) with said second wireless device (PER) thanks to the key (LTK).

3. A first wireless device (CEN) according to claim 2, wherein the password-based key exchange protocol (PP) is based on one of the following schemes: a passcode which has a fixed value preset in both sides, a passcode which is randomly generated by one side and manually entered on the other side or a passcode which is identified on one side and sent to the other side through an Out-of-Band channel.

4. A first wireless device (CEN) according to claim 1 or 2, wherein said second wireless device (PER) has a plurality of resources and wherein the application (AP1) is granted access to said plurality of resources as soon as the secure channel (CH) is established with said second wireless device (PER).

5. A first wireless device (CEN) according to claim 1, wherein the application (AP1) is configured to detect that the application (AP1) is no more bond with said second wireless device (PER) and to automatically trigger a further bonding step with said second wireless device (PER).

6. A first wireless device (CEN) according to claim 2, wherein the application (AP1) is configured to get an identifier of said second wireless device (PER) and to store in the secure container (SC) the identifier in association with the key (LTK).

7. A first wireless device (CEN) according to claim 2, wherein the secure container (SC) is a memory area protected and allocated to the application (AP1) or a physical secure element protected by access rights allocated to the application (AP1).

8. A method for allowing communication with an application (AP1), said application (AP1) being embedded in a first wireless device (CEN),
**characterized in that** said method comprises the steps:
- performing a pairing operation between said application (AP1) and a second wireless device (PER),
- performing a bonding operation between said application (AP1) and said second wireless device (PER),
- establishing a secure channel (CH) between the application (AP1) and said second wireless device (PER) by using a security layer provided by the application (AP1).

9. A method according to claim 8, wherein the pairing operation is performed by sharing a key (LTK) using a password-based key exchange protocol (PP), wherein the application (AP1) stores the key (LTK) in a secure container (SC) for the bonding operation, said application (AP1) having an exclusive access to the secure container (SC) and wherein the security layer of the application (AP1) establishes the secure channel (CH) with said second wireless device (PER) thanks to the key (LTK).

10. A method according to claim 8, wherein the second wireless device (PER) has a plurality of resources and wherein the application (AP1) is granted access to said plurality of resources as soon as the secure channel (CH) is established with said second wireless device (PER).
